# FASCICULE DE BREVET EUROPEEN

(11) **EP 2 234 837 B1**
(45) Date de publication et mention de la délivrance du brevet: **24.08.2011**
(21) Numéro de dépôt: 08860484.8
(22) Date de dépôt: 26.11.2008
(51) Int. Cl.: B60N 2/02, B60N 2/06

(54) **ENSEMBLE DE GLISSIERES, SIEGE COMPORTANT UN TEL ENSEMBLE DE GLISSIERES ET ORGANE SUPPORT POUR UN TEL ENSEMBLE DE GLISSIERES.**
FÜHRUNGSBAHNENSATZ, SITZ MIT SOLCH EINEM FÜHRUNGSBAHNENSATZ UND STÜTZGLIED FÜR SOLCH EINEN FÜHRUNGSBAHNENSATZ
SET OF SLIDEWAYS, SEAT COMPRISING SUCH A SET OF SLIDEWAYS AND SUPPORT MEMBER FOR SUCH A SET OF SLIDEWAYS

(30) Priorité: 11.12.2007 FR 0708628
(43) Date de publication de la demande: 06.10.2010
(73) Titulaire: Faurecia Sièges d'automobile, 92000 Nanterre (FR)
(72) Inventeur: THULEAU, Stéphane, F-53110 Lassay Les Chateaux (FR); DESQUESNE, Sylvain, F-14110 Conde Sur Noireau (FR); NAVATTE, Nicolas, F-61100 Flers (FR)
(74) Mandataire: Sonnenberg, Fred
(86) Numéro de dépôt international: PCT/FR2008/052132
(87) Numéro de publication internationale: WO 2009/074760

(56) Documents cités:
- DE-A1- 2 925 781
- DE-A1- 19 932 676
- FR-A- 2 883 810

## Description

La présente invention est relative aux ensembles de glissières, aux sièges comportant de tels ensembles de glissières et aux organes support pour de tels ensembles de glissières.

Plus particulièrement, l'invention concerne un ensemble de glissières pour siège de véhicule, comportant les caractéristiques de la revendication 1.

Par ailleurs, l'invention concerne aussi un siège de véhicule équipé d'un tel ensemble de glissières.

Enfin, l'invention concerne également un organe support pour un tel ensemble de glissières.

Le document FR-A-2 883 810 décrit un exemple d'un tel ensemble de glissières.

Dans les ensembles de glissières connus de ce type, l'organe support est une traverse qui est fixée à ses deux extrémités sur les deux glissières et qui comporte des guides en forme de clips de rétention des liaisons flexibles.

On connait aussi du document US 6,021,990 un mécanisme de réglage comprenant un moteur électrique et des organes support qui reposent sur une barre transversale qui relie les deux glissières.

Ces ensembles de glissières connus donnent toute satisfaction. Il est toutefois apparu utile de les perfectionner encore, notamment pour simplifier le montage.

A cet effet, selon l'invention, un ensemble de glissières du genre en question est caractérisé en ce que le dit organe support est fixé exclusivement au moteur électrique et à une des première et deuxième glissières et en ce que le dit organe support supporte à lui seul le poids du moteur électrique.

Grâce à ces dispositions, le montage du mécanisme de réglage s'en trouve simplifié. De plus, ceci peut permettre d'utiliser des liaisons flexibles simplifiées dépourvues de gaines de protection, le guide susmentionné remplaçant alors la gaine de protection.

Dans des modes de réalisation de l'ensemble de glissières selon l'invention, on peut avoir recours en outre à l'une et/ou à l'autre des dispositions suivantes :
- la liaison flexible s'étend sur une certaine longueur et ledit guide entoure la liaison flexible sur une majeure partie de ladite longueur.
- ledit guide est tubulaire.
- ledit guide comporte, le long de la liaison flexible, une succession d'auges de guidage disposées en alternance de part et d'autre de ladite liaison flexible.
- la liaison flexible comporte une âme rotative entraînée par le moteur, ladite âme rotative tournant au contact dudit guide.
- la liaison flexible comporte une âme rotative entraînée par le moteur, ladite âme rotative tournant dans une gaine tubulaire elle-même contenue dans le guide.
- l'organe support est formé d'une seule pièce en matière plastique.
- l'ensemble de glissières comprend des premier et deuxième organes support reliant le moteur respectivement aux première et deuxième glissières, le premier organe support étant plus court que le deuxième organe support et étant apte à supporter le moteur et limiter des mouvements de translation et de rotation du moteur.
- l'organe support comporte en outre :
- une pièce d'ancrage reliée à l'une des première et deuxième glissières,
- une platine d'extrémité verticale et parallèle à la direction longitudinale, recevant une face du moteur, le guide s'étendant selon la direction transversale entre la pièce d'ancrage et la platine d'extrémité et étant relié directement à ladite pièce d'ancrage et ladite platine d'extrémité,
- deux nervures horizontales s'étendant de part et d'autre dudit guide selon la direction transversale entre la pièce d'ancrage et la platine d'extrémité et étant reliées directement audit guide, à ladite pièce d'ancrage et à ladite platine d'extrémité,
- deux nervures verticales, encadrant respectivement les nervures horizontales et solidaires respectivement des dites nervures horizontales, de ladite pièce d'ancrage et de ladite platine d'extrémité.
- l'ensemble de glissières comprend des premier et deuxième organes support fixés l'un à l'autre.
- le premier organe support comprend des bras flexibles qui s'étendent chacun le long du moteur dans la direction transversale vers le deuxième organe support, jusqu'à une extrémité libre munie d'un crochet qui s'accroche au deuxième organe support.
- le premier organe support comprend au moins trois bras répartis autour du moteur.
- le moteur s'étend dans la direction longitudinale entre des première et deuxième extrémités, le premier organe support comporte une première platine d'extrémité qui reçoit la première extrémité du moteur, le deuxième organe support comporte une deuxième platine d'extrémité qui reçoit la deuxième extrémité du moteur, les bras du premier organe de support sont solidaires de la première platine d'extrémité et les crochets desdits bras sont accrochés sur la deuxième platine d'extrémité.
- les crochets sont accrochés sur la deuxième platine d'extrémité de façon à empêcher une séparation des premier et deuxième organes support dans la direction transversale et sont retenus sur ladite deuxième platine d'extrémité par clipsage.
- au moins une des première et deuxième extrémités du moteur comporte un relief qui coopère par emboîtement avec un relief complémentaire ménagé dans l'une des première et deuxième platines d'extrémité pour empêcher une rotation relative du moteur par rapport à ladite platine d'extrémité.

Par ailleurs l'invention a également pour objet un siège de véhicule comportant une assise portée par un ensemble de glissières tel que défini ci-dessus.

Enfin, l'invention a encore pour objet un organe support pour un ensemble de glissières tel que défini précédemment, adapté pour relier un moteur électrique à au moins une glissière de siège de véhicule, ledit organe support comprenant au moins un guide adapté pour retenir une liaison flexible reliant le moteur à un mécanisme de réglage appartenant à la glissière, ledit guide étant conformé pour entourer complètement la liaison flexible sur au moins une partie de sa longueur lorsque ladite liaison flexible est montée sur ledit organe support.

D'autres caractérictiques et avantages de l'invention apparaîtront au cours de la description suivante de deux de ses formes de réalisation, données à titre d'exemples non limitatifs, en regard des dessins joints.

Sur les dessins :
- la figure 1 est une vue schématique d'un siège pouvant inclure un ensemble de glissières selon une première forme de réalisation de l'invention,
- la figure 2 représente une vue de face en coupe partielle du siège de véhicule conforme à la figure 1 ;
- la figure 3 est une vue en perspective de l'ensemble de glissières du siège de la figure 1, comprenant deux glissières reliées entre elles par un dispositif de motorisation,
- la figure 4 est une vue en perspective d'un éclaté du dispositif de motorisation de la figure 3,
- la figure 5 est une vue en perspective, partiellement écorchée, du dispositif de motorisation de la figure 4,
- la figure 6 est une vue en coupe longitudinale verticale d'une partie du dispositif de motorisation de la figure 5,
- les figures 7 et 8 sont des vues en perspective de deux organes support appartenant au dispositif de motorisation,
- la figure 9 est une vue de détail montrant la fixation entre les deux organes support des figures 7 et 8,
- la figure 10 est une vue en section selon le plan X-X de la figure 5,
- les figures 11 et 12 sont des vues similaires respectivement aux figures 5 et 6, dans une deuxième forme de réalisation de l'invention,
- et les figures 13 et 14 sont des vues en section respectivement selon les plans XIII-XIII et XIV-XIV de la figure 11.

Sur les différentes figures, les mêmes références désignent des éléments identiques ou similaires.

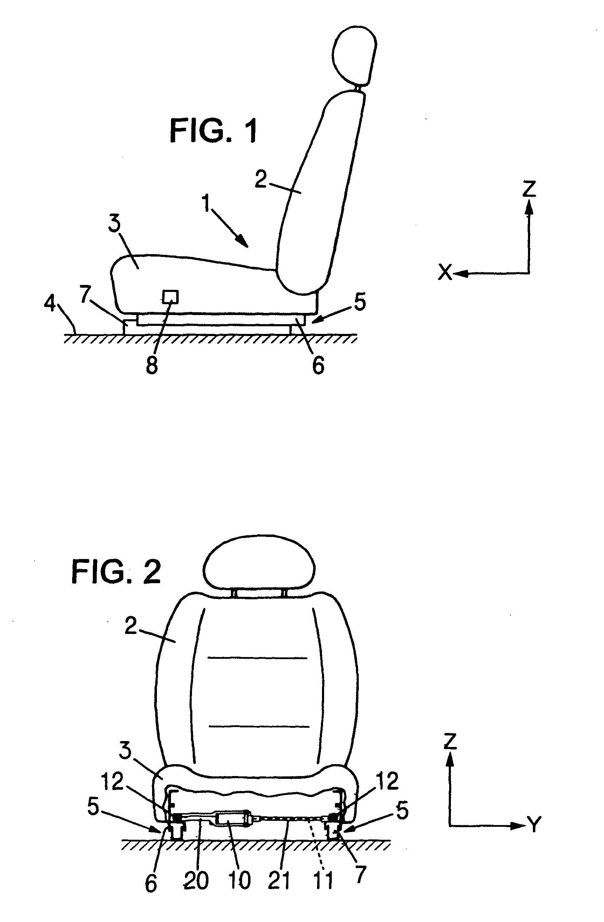

La figure 1 représente un siège de véhicule automobile 1 qui comprend un dossier 2 porté par une assise 3 elle-même montée coulissante sur le plancher 4 du véhicule dans une direction longitudinale X sensiblement horizontale.

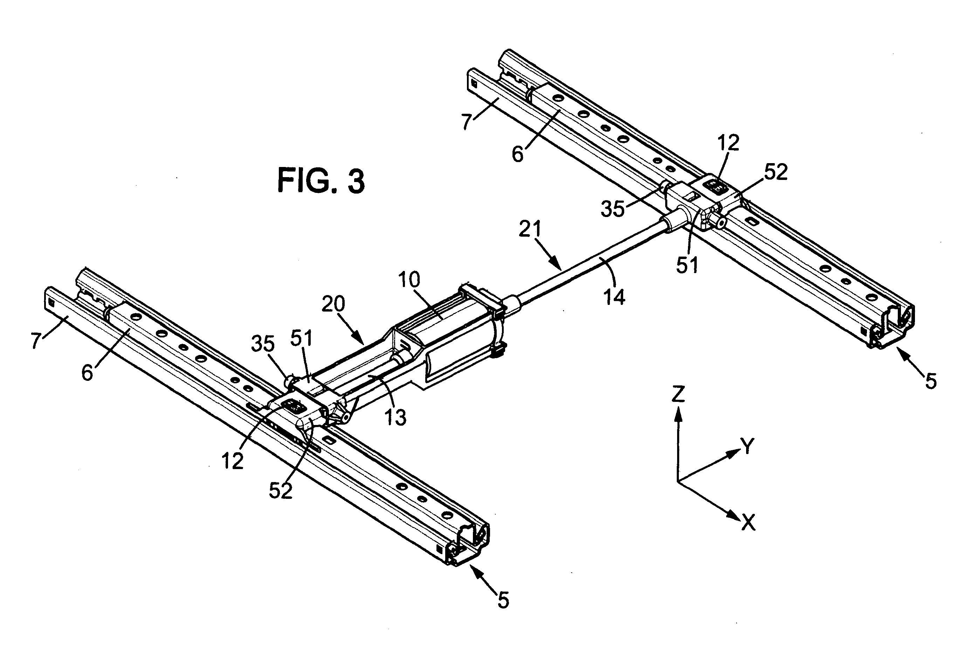

L'assise 3 est reliée au plancher 4 par un ensemble de première et deuxième glissières parallèles 5, bien visibles sur les figures 2 et 3. Chacune de ces dites glissières comporte des premier 6 et deuxième 7 éléments de glissière, liés respectivement à l'assise 3 et au plancher 4, qui coulissent l'un sur l'autre dans la direction longitudinale X.

Le réglage des première et deuxième glissières 5 est motorisé, et commandé par exemple au moyen d'un bouton poussoir 8 (figure 1) qui commande le fonctionnement dispositif de motorisation visible sur les figures 2 et 3.

Le dispositif de motorisation comprend un moteur électrique 10 relié aux glissières 5 par des premier et deuxième organes support 20,21 s'étendant selon une direction horizontale transversale Y perpendiculaire à la direction longitudinale X. Ces organes support 20,21 sont pourvus de guides 13,14 dans lequel sont logées des liaisons flexibles qui seront décrites plus en détail ci-après. Chacune des liaisons flexibles comporte une âme métallique rotative s'étendant entre :
- une première extrémité entraînée en rotation par le rotor du moteur 10,
- et une deuxième extrémité entraînant un mécanisme d'entraînement 12 à vis et écrou porté par le premier élément 6 de la glissière correspondante 5 (voir la figure 3).

Le premier organe support 20 peut être plus court que le deuxième organe support 21 dans la direction transversale Y et peut le cas échéant être adapté pour supporter le moteur 10 à lui seul. Eventuellement, le dispositif de motorisation pourrait comporter le premier organe support 20 et aucun deuxième organe support, ou un deuxième organe support dépourvu du guide 14 dans lequel est logée la liaison flexible correspondante.

L'organe support 20 s'étend selon la direction horizontale transversale Y depuis la platine 40 d'interface avec le moteur jusqu'à la pièce d'ancrage 51 qui s'accouple avec la contrepartie 52 solidaire de l'élément mobile 6 de la première glissière 5, au moyen le cas échéant d'une vis 35 dont l'axe est sensiblement parallèle à la direction longitudinale X. Ainsi, l'organe support 20 est fixé exclusivement au moteur 10 et à l'élément mobile 6 de la première glissière 5.

Cet organe support est de préférence réalisé en matière plastique, et peut être de préférence réalisé en une seule pièce, à partir d'un procédé de fabrication connu dans l'art.
Cet organe support est pourvu du guide 13 contenant la liaison flexible 11 et de nervures de renfort qui seront détaillées ci après.

De la même façon, l'organe support 21 s'étend selon la direction horizontale transversale Y depuis la platine 41 d'interface avec le moteur 10 jusqu'à la pièce d'ancrage 51 qui s'accouple avec la contrepartie 52 solidaire de l'élément mobile 6 de la deuxième glissière 5, au moyen le cas échéant d'une vis 35 dont l'axe est sensiblement parallèle à la direction longitudinale X. Ainsi, l'organe support 21 est fixé exclusivement au moteur 10 et à l'élément mobile 6 de la deuxième glissière 5.

L'organe support 21 comprend le guide 14, de forme tubulaire par exemple mais tout autre forme peut être envisagée, ce guide 14 contient la liaison flexible 11b. L'organe support 21 est de fabriqué soit en une seule pièce soit en deux ou trois pièces emboitées en force les unes dans les autres. Le deuxième organe support 21 est de préférence réalisé en matière plastique.

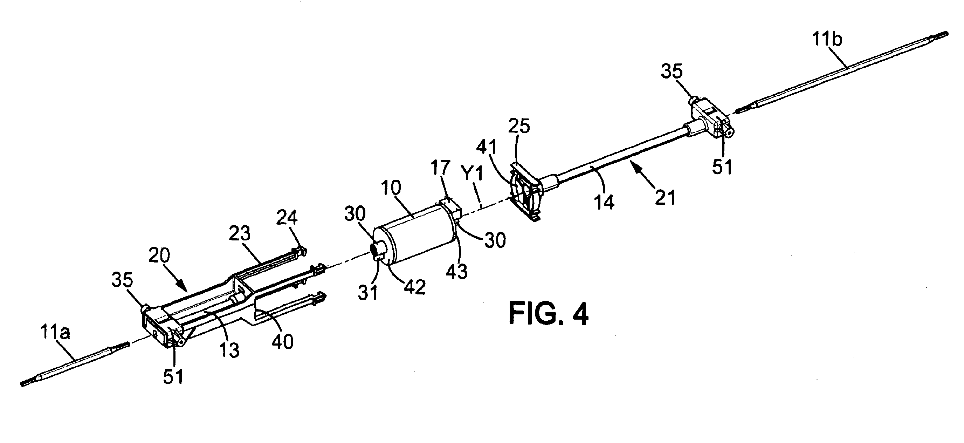

La figure 4 représente un éclaté du dispositif de motorisation comprenant le moteur, le premier organe support, le cas échéant le deuxième organe support, la première liaison flexible 11a et le cas échéant la deuxième liaison flexible 11b. La figure 4 permet notamment de montrer le procédé d'assemblage du dispositif de motorisation. L'organe support 20 est équipé d'une pluralité de bras flexibles 23 qui s'étendent le long de l'axe Y1 vers le second organe support et dont la description détaillée sera donnée plus loin. Le nombre de bras flexibles 23 peut être de quatre comme sur les figures par exemple, mais il peut aussi être égal à trois ou à plus de quatre et la répartition autour de l'enveloppe du moteur peut également être quelconque. En outre, les bras flexibles peuvent le cas échéant être reliés entre eux par des pontets. On peut tout à fait concevoir que le premier organe 20 support soit équipé, à la place de bras, de cloisons plus larges, tout en restant dans le cadre de la présente invention.

Le moteur est inséré dans le premier organe support 20 par translation selon l'axe Y1. Ledit moteur se glisse longitudinalement entre les bras flexibles 23, jusqu'à ce que la face 42 dudit moteur soit en contact avec la platine 40 de l'organe support. Un relief 31 qui sera décrit plus loin permet l'immobilisation en rotation du moteur par rapport à l'organe support autour de l'axe Y1.

Le deuxième organe support 21 est également assemblé par translation, vers le moteur parallèlement à l'axe Y1, jusqu'à ce que la platine 41 de l'extrémité 25 dudit second organe support vienne s'emboiter dans la face 43 du moteur 10. Un deuxième relief 31 permet également d'immobiliser en rotation le moteur par rapport à ce deuxième organe support autour de l'axe Y1.

Une première liaison flexible 11a est ensuite enfilée, toujours parallèlement à l'axe Y1 dans le guide 13 prévu à cet effet dans l'organe support 20. L'enfilage se termine par l'insertion de l'extrémité 18 de la liaison flexible dans l'embout 30 du moteur. De la même façon, la seconde liaison flexible 11b est enfilée par le bout de l'organe support 21, toujours parallèlement à l'axe Y1, puis s'engage à l'intérieur dans le guide 14 et entre en fin de course dans l'embout 30 du moteur.

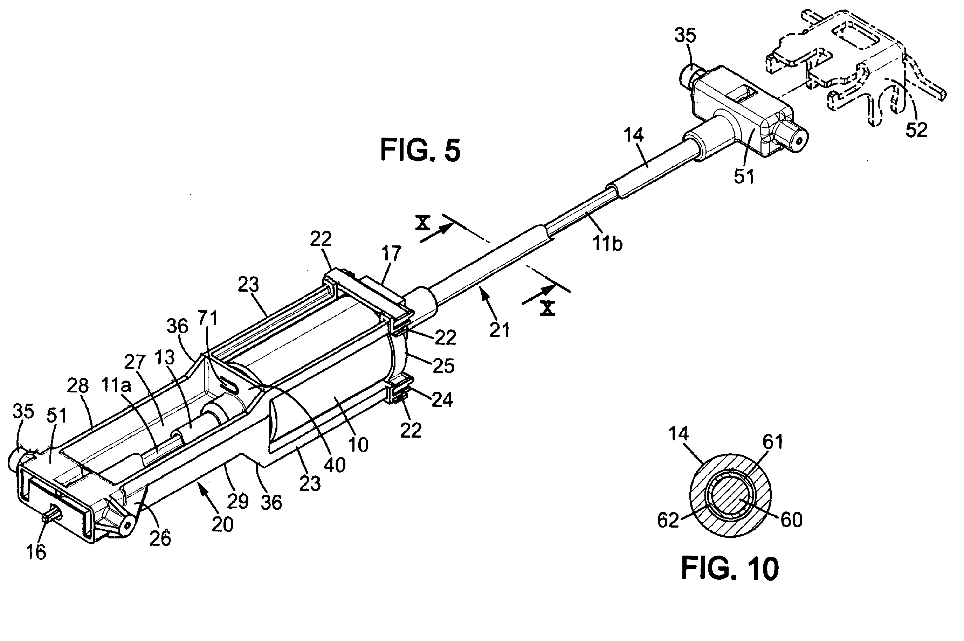

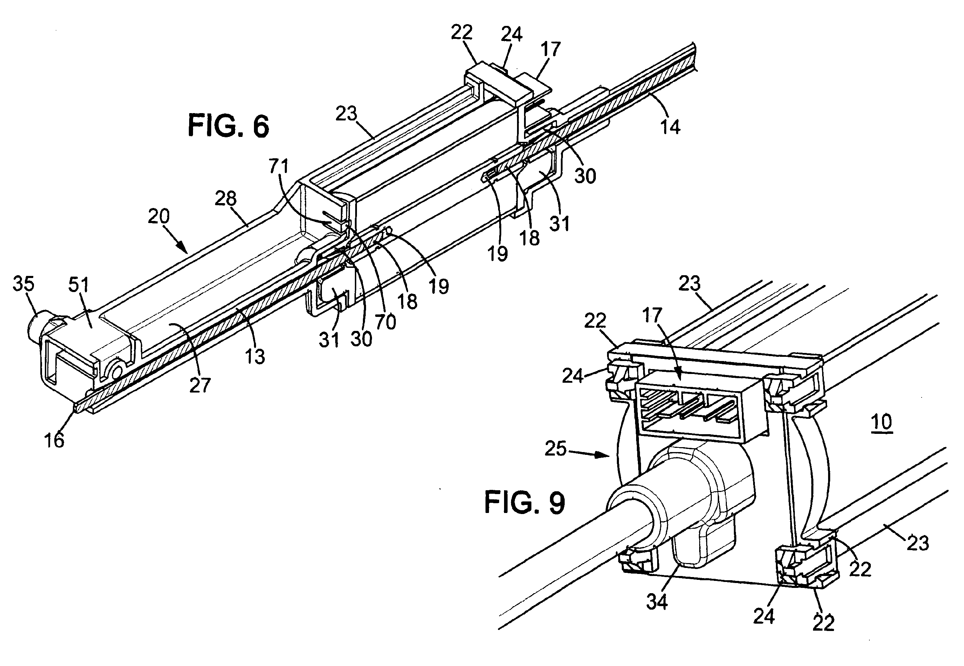

Les figures 5 et 6 représentent un écorché du dispositif de motorisation complet selon toujours le premier mode de réalisation de l'invention. Sur ces figures sont mis notamment en évidence le moteur 10 et le premier organe support 20 qui comprend une pluralité de bras flexibles 23 créant un logement pour le moteur 10. Lesdits bras flexibles possèdent des crochets 24 qui maintiennent en position d'assemblage l'autre organe support 21.
Ledit deuxième organe support possède une extrémité 25 équipée d'une platine 41, sensiblement verticale, appliquée sur la face 43 du moteur, parallèlement à cette dernière. Cette platine 41 est munie de clips de fixation 22 qui coopèrent avec les crochets 24 des bras du premier organe support pour les verrouiller dans la position de maintien, comme ceci peut aussi se voir en détail sur la figure 9. Le bout de chaque bras 23 s'engage dans un logement correspondant en forme de U présent dans la platine 41, le crochet 24 étant en appui sur la face extérieure de la platine 41. Des clips flexibles 22 ménagés dans lesdits logements en forme de U permettent d'immobiliser chacun des bras 23 selon l'axe X et empêchent ainsi toute séparation de l'assemblage des deux organes support.

Toute autre forme de crochet et de clip de rétention peut être utilisée tout en restant dans le cadre de la présente invention.

Revenant maintenant aux figures 5 et 6, la liaison flexible 11a est logée à l'intérieur du guide 13 du premier organe support 20 et la liaison flexible 11b est logée à l'intérieur du guide 14 du second organe support 21. Ces liaisons flexibles sont des câbles floqués mis en rotation par le moteur 10. Habituellement, de tels câbles sont recouverts par des gaines de protection qui ne tournent pas quand le câble tourne. L'invention permet avantageusement de se passer de telles gaines, car la fonction gaine est réalisée par la face interne du guide (respectivement 13 et 14) de l'organe support (respectivement 20 et 21), ceci se voit notamment de façon détaillée dans la section de la figure 10. La liaison flexible se compose d'une âme métallique 60 recouverte d'une couche de flocage 61 destinée à diminuer les bruits de fonctionnement. Un jeu minime 62 peut être prévu entre la liaison flexible et l'enveloppe que constitue la face interne du guide 14 de l'organe support 21 ; mais le flocage 61 peut aussi être légèrement comprimé, donc sans jeu par rapport à l'enveloppe que constitue la face interne du guide 14.

L'extrémité 16 de chacune des liaisons flexibles coopère avec le mécanisme de réglage 12 des première et deuxième glissières 5. A cet endroit, les extrémités de chacune des pièces d'ancrage 51 s'emboitent respectivement dans les contreparties 52 de la partie mobile 6 de la glissière. Cet emboitement est le cas échéant sécurisé par une vis 35, qui traverse avantageusement toute la pièce d'ancrage 51 selon l'axe X.

La figure 6 permet en outre de visualiser l'emboitement des embouts carrés 18 des liaisons flexibles dans des orifices femelles 19, carrés de préférence, situés dans le rotor du moteur, au niveau de chacune de ses deux extrémités. Toute autre forme non de révolution peut aussi être utilisée pour les embouts 18 et les logements 19 sans sorti du cadre de l'invention.

L'organe support 20 possède des nervures de renfort pour supporter le poids du moteur ainsi que les accélérations et chocs qui peuvent subvenir au cours de l'utilisation du véhicule. A cet effet, une première nervure horizontale 27 s'étend de part et d'autre du guide 13, selon la direction transversale Y, sur toute la longueur dudit guide. Cette nervure relie directement la platine 40 de l'organe support, située sur une extrémité, en interface de la face 42 du moteur, à la pièce d'ancrage 51 de l'organe support, sur l'autre extrémité, qui est fixée sur le rail 6 par l'intermédiaire de la contrepartie 52. Cette nervure 27 est en outre reliée directement au guide 13.

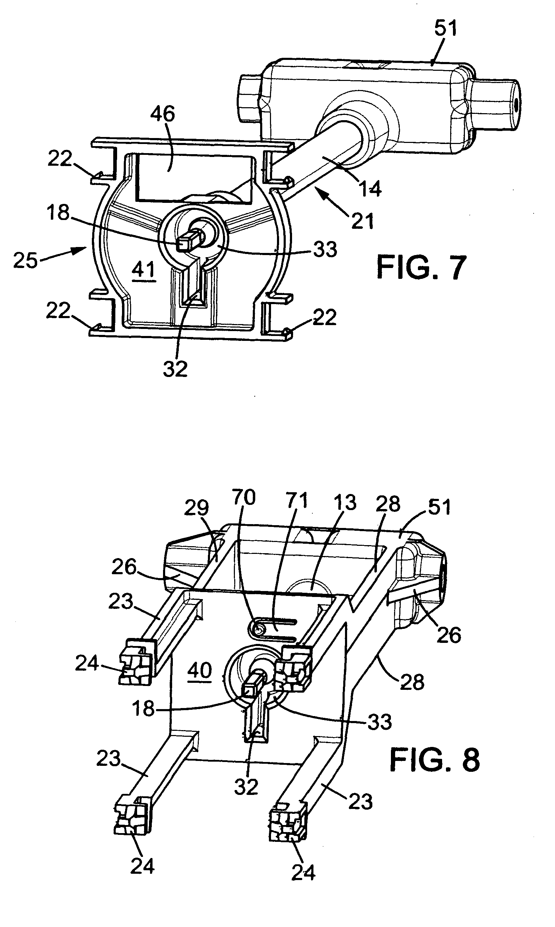

Cette nervure horizontale 27 est reliée à son tour à deux nervures verticales 28,29, situées dans le plan YZ, qui encadrent ladite nervure horizontale 27. La première nervure 28 et la deuxième nervure 29 sont fixées respectivement aux extrémités radiales de la nervure 27. Ces nervures 28,29 s'étendent sur toute la longueur de l'organe support 20 et relient d'une par la platine 40 de l'organe support et d'autre part l'autre la pièce d'ancrage 51 de l'organe support solidaire du rail 6.
Ces nervures horizontales et verticales sont complétées par des triangles complémentaires de renfort : un premier triangle horizontal 26 s'étend de l'axe médian de la nervure 29 vers l'extrémité du logement de la vis 35 dans la pièce d'ancrage 51. Une autre nervure équivalente symétrique par rapport à l'axe Y1, non visible sur la figure 5 mais visible sur la figure 8, relie de la même façon la nervure 28 à la pièce d'ancrage 51. En outre, d'autres triangles de renfort verticaux 36 relient les nervures 28 et 29 à la platine 40 de l'organe support, jusqu'aux emplantures des bras 23.

La figure 7 montre une vue plus détaillée de l'extrémité 25 de l'organe support 21. Cette extrémité comprend en particulier la platine 41 destinée à recevoir la face 43 du moteur 10. Cette platine est munie d'une partie cylindrique centrale 33 dans lequel s'engage l'embout 30 du moteur, d'une encoche 32 en forme de relief complémentaire du relief 31 présent sur la face 43 du moteur. En position assemblée, le relief 31 s'engage dans le relief complémentaire 32 pour éviter la rotation du moteur 10 par rapport à l'organe support 21 autour de l'axe Y1. En outre, il est prévu un évidement 46 qui permet le passage du connecteur électrique 17 du moteur, et une pluralité de clips 22 qui immobilisent les crochets 24 des bras 23 du premier organe support 20, comme ceci est représenté en détail sur la figure 9. La liaison flexible 11b est contenue dans le guide 14 et son extrémité 18, de section non circulaire, vient s'emboiter dans le logement 19 correspondant dans le moteur.

De façon similaire, la figure 8 montre une autre vue du premier organe support 20 contenant les éléments d'interface avec le moteur 10 et avec le deuxième organe support 21. On y retrouve notamment la platine 40 qui reçoit la face 42 du moteur. Cette platine comprend une partie cylindrique centrale 33 dans lequel est inséré l'embout 30 du moteur et une encoche 32 en forme de relief complémentaire du relief 31 présent sur la face 42 du moteur. En position assemblée, le relief 31 s'engage dans le relief complémentaire 32 pour éviter la rotation du moteur 10 par rapport à l'organe support 20 autour de l'axe Y1.

De plus l'organe support 20 est pourvu d'une pluralité de bras flexibles 23, de préférence en matière plastique et issu du procédé de fabrication en une seule pièce de l'organe support.

Enfin l'organe support 20 est pourvu de nervures de renfort 28,29 déjà décrites ci-dessus, aptes à maintenir le moteur en position même en cas d'accélération importantes ou de chocs. Ces nervures 28 substantiellement verticales sont complétées par des triangles de renfort horizontaux 26.

Par ailleurs, en se référant aux figures 5, 6 et 8, l'invention propose également sur la platine 40 de l'organe support 20 une languette élastique 71 pourvue d'un pion 70 en saillie axiale vers l'intérieur par rapport à la platine 40 de l'organe support. Ce pion 70 monté sur sa languette élastique 71 permet de rattraper un jeu éventuel dans l'assemblage du moteur entre les deux organes support, diminuant ainsi les bruits de fonctionnement. Avantageusement, ladite languette munie dudit pion est réalisée de préférence en matière plastique et est issue du procédé de fabrication en une seule pièce de l'organe support 20.

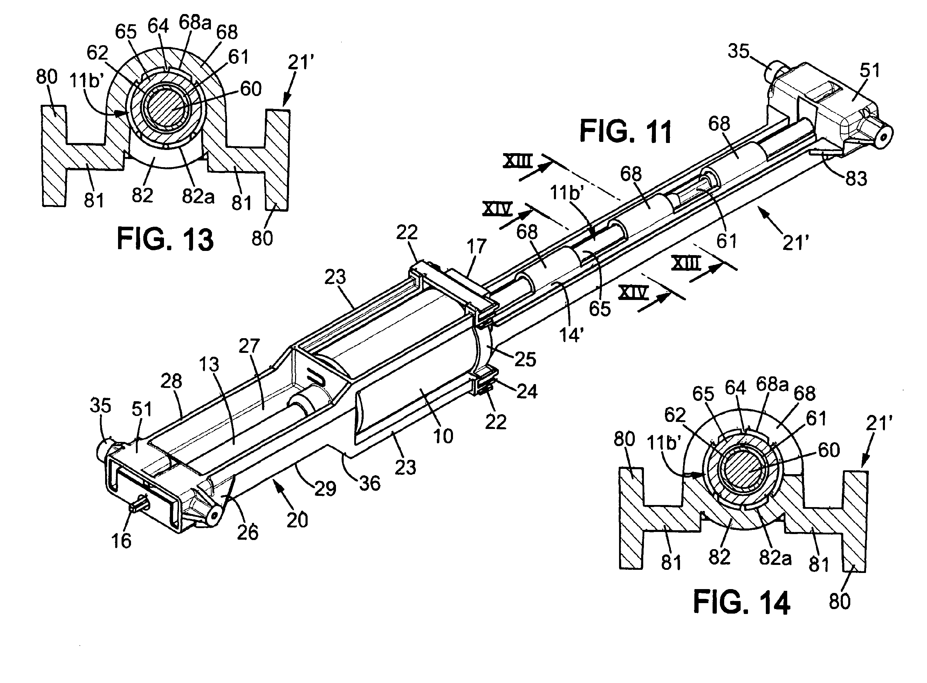

La deuxième forme de réalisation de l'invention, représentée sur les figures 11 à 14, est similaire à la première forme de réalisation et ne sera pas décrite à nouveau en détail ici. En particulier, dans cette deuxième forme de réalisation :
- la conformation générale du siège et des glissières peut être similaire à celle des figures 1 à 3,
- le moteur 10, la première liaison flexible 11a et le premier organe support peuvent être identiques ou similaires au premier organe support 20 de la première forme de réalisation précédemment décrite,
- le mode de fixation entre les premier et deuxième organes support peut également être identique ou similaire à la première forme de réalisation.

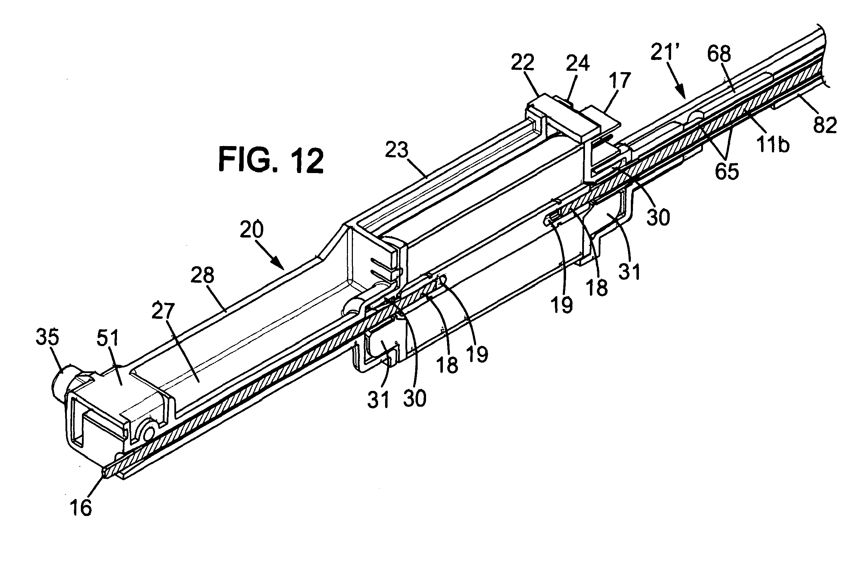

Les figures 11 et 12 représente l'ensemble du dispositif de motorisation dans ce deuxième mode de réalisation, qui diffère de la première forme de réalisation essentiellement par le deuxième organe support 21' et la deuxième liaison flexible 11b'.

Dans ce deuxième mode de réalisation de l'invention, l'extrémité 25 et la platine 41 du deuxième organe support 21' peuvent également être identiques au premier mode de réalisation et les caractéristiques différentes du deuxième organe support 21' concernent principalement le guidage de la liaison flexible 11b'.

En effet, l'organe support 21' comporte un guide 14' qui n'entoure pas la liaison flexible sur toute sa longueur mais possède des guides supérieurs 68 et des guides inférieurs 82 dans lesquels la liaison flexible 11b' est enfilée, ces guides supérieurs et inférieurs étant aptes à maintenir la liaison flexible 11b' en position. Ces guides supérieurs et inférieurs 68, 82 se succèdent de façon alternée, sur la totalité de la longueur du deuxième organe support 21'. Ces guides sont en forme d'auges hémi-cylindriques et sont disposés pour que leurs surfaces intérieures concaves 68a, 82a soient alignées le long d'une même surface cylindrique (voir les figures 13 et 14).

L'organe support 21' possède des nervures de renfort pour augmenter la rigidité du dispositif de motorisation. A cet effet, une première nervure horizontale 81 s'étend de part et d'autre du guide 14', selon la direction transversale Y, sur toute la longueur dudit guide. Cette nervure relie directement la platine 41 de l'organe support, située sur une extrémité, en interface de la face 43 du moteur, à la pièce d'ancrage 51 de l'organe support, sur l'autre extrémité, qui est fixée sur le rail 6 par l'intermédiaire de la contrepartie 52. Cette nervure 81 est en outre reliée directement au guide 14'

Cette nervure horizontale 81 est reliée à son tour à deux nervures verticales 80, situées dans le plan YZ, qui encadrent ladite nervure horizontale 81. Les première nervure et deuxième nervures verticales 80 sont fixées respectivement aux extrémités radiales de la nervure 81. Ces nervures 80 s'étendent sur toute la longueur de l'organe support 21' et relient d'une par la platine 41 de l'organe support et d'autre part la pièce d'ancrage 51 de l'organe support qui est fixée sur le rail 6.

Ces nervures horizontales et verticales sont complétées par des triangles complémentaires de renfort : des premier et deuxième triangles horizontaux 83 s'étendent respectivement de la première et deuxième nervure 80 vers la pièce d'ancrage 51.

La deuxième liaison flexible 11b' comprend, comme cela est représenté sur les figues 13 et 14, une âme métallique 60 recouverte d'une couche de flocage 61 destinée à diminuer les bruits de fonctionnement. Cette âme floquée est logée dans une gaine 65 qui ne tourne pas avec ladite âme, moyennant la présence d'un jeu minime 62. La gaine 65 peut être maintenue dans les guides supérieurs 68 et inférieurs 82 par l'intermédiaire de petits bossages longitudinaux 64 ménagés sur les faces intérieures 68a, 82a de ces guides.

## Revendications

1. Ensemble de glissières pour siège de véhicule, comportant :
- des première et deuxième glissières parallèles (5) s'étendant selon une direction longitudinale (X) et comportant chacune un mécanisme de réglage (12),
- un moteur électrique (10) adapté pour entraîner les mécanismes de réglages (12) desdites glissières et relié auxdits mécanismes de réglages par des liaisons flexibles (11a, 11b ; 11b'),
- au moins un organe support (20, 21 ; 21') s'étendant selon une direction transversale (Y) sensiblement perpendiculaire à la direction longitudinale (X) et reliant le moteur à au moins une des première et deuxième glissières (5), ledit organe support (20, 21 ; 21') comprenant au moins un guide (13, 14 ; 14') adapté pour retenir la liaison flexible et entourant complètement la liaison flexible (11a, 11b; 11b') sur au moins une partie de sa longueur,
**caractérisé en ce que** le dit organe support (20, 21 ; 21') est fixé exclusivement au moteur électrique (10) et à une des première et deuxième glissières (5) et **en ce que** le dit organe support (20, 21 ; 21') supporte à lui seul le poids du moteur électrique (10).

2. Ensemble de glissières selon la revendication 1, dans lequel la liaison flexible (11a, 11b ; 11b') s'étend sur une certaine longueur et ledit guide (13, 14; 14') entoure la liaison flexible (11a, 11b ; 11b') sur une majeure partie de ladite longueur.

3. Ensemble de glissières selon la revendication 1 ou la revendication 2, dans lequel ledit guide (13, 14) est tubulaire.

4. Ensemble de glissières selon la revendication 1 ou la revendication 2, dans lequel ledit guide (14') comporte, le long de la liaison flexible (11b'), une succession d'auges de guidage (68, 82) disposées en alternance de part et d'autre de ladite liaison flexible.

5. Ensemble de glissières selon l'une quelconque des revendications précédentes, dans lequel la liaison flexible comporte une âme rotative (11a, 11b) entraînée par le moteur (10), ladite âme rotative tournant au contact dudit guide (13, 14).

6. Ensemble de glissières selon l'une quelconque des revendications 1 à 4, dans lequel la liaison flexible comporte une âme rotative (60) entraînée par le moteur (10), ladite âme rotative tournant dans une gaine tubulaire (65) elle-même contenue dans le guide (14').

7. Ensemble de glissières selon l'une quelconque des revendications précédentes, dans lequel l'organe support (20, 21 ; 21') est formé d'une seule pièce en matière plastique.

8. Ensemble de glissières selon l'une des revendications précédentes, comprenant des premier et deuxième organes support (20, 21 ; 21') reliant le moteur (10) respectivement aux première et deuxième glissières (5), le premier organe support (20) étant plus court que le deuxième organe support (21 ; 21') et étant apte à supporter le moteur (10) et limiter des mouvements de translation et de rotation du moteur.

9. Ensemble de glissières selon l'une quelconque des revendications précédentes, comprenant des premier et deuxième organes support (20, 21 ; 21') fixés l'un à l'autre.

10. Ensemble de glissières selon la revendication 9, dans lequel dans lequel le premier organe support (20) comprend des bras flexibles (23) qui s'étendent chacun le long du moteur (10) jusqu'à une extrémité libre munie d'un crochet (24) qui s'accroche au deuxième organe support (21 ; 21') et dans lequel le moteur (10) s'étend dans la direction longitudinale entre des première et deuxième extrémités (42, 43), le premier organe support comporte une première platine d'extrémité (40) qui reçoit la première extrémité (42) du moteur, le deuxième organe support comporte une deuxième platine d'extrémité (41) qui reçoit la deuxième extrémité (43) du moteur, les bras (23) du premier organe de support sont solidaires de la première platine d'extrémité (40) et les crochets (24) desdits bras sont accrochés sur la deuxième platine d'extrémité (41).

11. Ensemble de glissières selon la revendication 10, dans lequel les crochets (24) sont accrochés sur la deuxième platine d'extrémité (41) de façon à empêcher une séparation des premier et deuxième organes support (20, 21 ; 21') dans la direction transversale (Y) et sont retenus sur ladite deuxième platine d'extrémité (41) par clipsage.

12. Ensemble de glissières selon l'une quelconque des revendications 10 à 11, dans lequel au moins une des première et deuxième extrémités (42,43) du moteur (10) comporte un relief (31) qui coopère par emboîtement avec un relief complémentaire (32) ménagé dans l'une des première et deuxième platines d'extrémité pour empêcher une rotation relative du moteur par rapport à ladite platine d'extrémité.

13. Siège de véhicule comportant une assise (3) portée par un ensemble de glissières (5) selon l'une quelconque des revendications précédentes.

14. Organe support pour un ensemble de glissières selon l'une quelconque des revendications 1 à 12, adapté pour relier un moteur électrique (10) à au moins une glissière (5) de siège de véhicule, ledit organe support (20, 21 ; 21') comprenant au moins un guide (13, 14 ; 14') adapté pour retenir une liaison flexible (11a, 11b ; 11b') reliant le moteur (10) à un mécanisme de réglage (12) appartenant à la glissière,
**caractérisé en ce que** ledit guide (13, 14; 14') est conformé pour entourer complètement la liaison flexible (11a, 11b ; 11b') sur au moins une partie de sa longueur lorsque ladite liaison flexible est montée sur ledit organe support.

## Claims

1. A track assembly for a vehicle seat, comprising:
first and second parallel tracks (5) extending along a longitudinal direction (X) and each comprising an adjustment mechanism (12),
an electric motor (10) adapted to drive the adjustment mechanisms (12) for adjusting said tracks, and connected to said adjustment mechanisms by flexible connections (11a, 11b; 11b'),
at least one support member (20, 21; 21') extending along a transversal direction (Y) substantially perpendicular to the longitudinal direction (X) and connecting the motor to at least one of first and second tracks (5), said support member (20, 21; 21') comprising at least one guide (13, 14; 14') adapted for retaining the flexible connection and fully surrounding the flexible connection (11a, 11b; 11b') over at least one portion of its length,
**characterised in that** said support member (20, 21; 21') is fixed exclusively to the electric motor (10) and to one of first and second tracks (5) and **in that** said support (20, 21; 21') member alone supports the weight of the electric motor (10).

2. The track assembly according to claim 1, wherein the flexible connection (11a, 11b; 11b') extends over a certain length and said guide (13, 14; 14') surrounds the flexible connection (11a, 11b; 11b') over a major portion of said length.

3. The track assembly according to claim 1 or claim 2, wherein said guide (13, 14) is tubular.

4. The track assembly according to claim 1 or claim 2, wherein said guide (14') comprises, along the flexible connection (11b'), a succession of guide troughs (68, 82) arranged alternating on either side of said flexible connection.

5. The track assembly according to any one of the preceding claims, wherein the flexible connection (11a, 11b) comprises a rotating core (60) driven by the motor (10), said rotating core turning in contact with said guide (13, 14).

6. The track assembly according to any one of claim 1 to 4, wherein the flexible connection comprises a rotating core (60) driven by the motor (10), said rotating core turning in a tubular sheath (65) which itself is contained in the guide (14').

7. The track assembly according to any one of the preceding claims, wherein the support member (20, 21; 21') is formed of a single part of plastic material.

8. The track assembly according to any one of the preceding claims, comprising first and second support members (20, 21; 21') connecting the motor (10) respectively to the first and second tracks (5), the first support member (20) being shorter than the second support member (21; 21') and able to support the motor (10) and limit the movement of translation and rotation of the motor.

9. The track assembly according any one of the proceeding claims, comprising first and second support members (20, 21; 21') fixed to one another.

10. The track assembly according to claim 9, wherein the first support member (20) comprises flexible arms (23) which each extend along the motor (10) down to a free end provided with a hook (24) which is hooked to the second support member (21; 21') and wherein the motor (10) extends in the longitudinal direction between the first and second ends (42, 43), the first support member comprises a first end plate (40) which receives the first end (42) of the motor, the second support member comprises a second end plate which receives the second end (43) of the motor, the arms (23) of the first support member are integral with the first end plate (40) and the hooks of (24) said arms are hooked onto the second end plate (41).

11. The track assembly according to claim 10, wherein the hooks (24) are hooked onto the second end (41) plate in such a way as to prevent a separation of the first and second support members (20, 21; 21') in the transversal direction (Y) and are retained on said second end plate (41) via clipping.

12. The track assembly according to claims 10 to 11, wherein at least one of the first and second ends (42, 43) of the motor (10) comprises a portion in relief (31) which cooperates by nesting with a complementary portion in relief (32) arranged in one of the first and second end plates in order to prevent a relative rotation of the motor in relation to said end plate.

13. A vehicle seat comprising a seat (3) carried by a track assembly (5) according to any one of the preceding claims.

14. A support member for a track assembly according to any one of claims 1 to 12, adapted for connecting an electric motor (10) to at least one track (5) of a seat of a vehicle, said support member (20, 21; 21') comprising at least one guide (13, 14;14') adapted for retaining a flexible connection (11a, 11b; 11b') connecting the motor 10) to an adjustment mechanism belonging to the track,
**characterised in that** said guide (13, 14;14') is shaped in order to fully surround the flexible connection (11a, 11b; 11b') over at least one portion of its length when said flexible connection is mounted in said support member.

## Patentansprüche

1. Gleitschienenanordnung für einen Fahrzeugsitz, umfassend:
- erste und zweite parallele Gleitschienen (5), sich erstreckend entlang einer Längsrichtung (X) und umfassend jeweils einen Einstellmechanismus (12),
- einen Elektromotor (10), ausgelegt zum Antreiben der Einstellmechanismen (12) der Gleitschienen, und verbunden mit den Einstellmechanismen mittels flexibler Kopplungen (11a, 11b; 11b'),
- zumindest ein Stützelement (20, 21; 21'), sich erstreckend entlang einer transversalen Richtung (Y), im Wesentlichen senkrecht zur Längsrichtung (X) und den Motor verbindend mit zumindest einer der ersten und zweiten Gleitschienen (5), wobei das Stützelement (20, 21; 21') zumindest eine Führung (13, 14; 14') umfasst, ausgelegt zum Zurückhalten der flexiblen Kopplung und vollständig einfassend die flexible Kopplung (11a, 11b; 11b') über zumindest einen Teil der Länge davon,
- **dadurch gekennzeichnet, dass** das Stützelement (20, 21; 21') ausschließlich fixiert oder festgelegt ist am Elektromotor (10) und an einer der ersten und zweiten Gleitschienen (5), und **dadurch**, dass das Stützelement (20, 21; 21') für sich allein das Gewicht des Elektromotors (10) stützt oder trägt.

2. Gleitschienenanordnung nach Anspruch 1, bei welchem die flexible Kopplung (11a, 11b; 11b') sich über eine bestimmte Länge erstreckt, wobei die Führung (13, 14; 14') die flexible Kopplung (11a, 11b; 11b') über einen größeren Teil der Länge einfasst oder umschließt.

3. Gleitschienenanordnung nach Anspruch 1 oder Anspruch 2, bei welcher die Führung (13, 14) tubusartig ist.

4. Gleitschienenanordnung nach Anspruch 1 oder Anspruch 2, bei welcher die Führung (14'), entlang der flexiblen Kopplung (11b'), eine Folge von Führungswangen (68, 82) umfasst, angeordnet abwechselnd diesseits und jenseits der flexiblen Kopplung.

5. Gleitschienenanordnung nach einem der vorangegangenen Ansprüche, bei welcher die flexible Kopplung (11a, 11b) eine drehbare Seele (60) umfasst, angetrieben durch den Motor (10), wobei die drehbare Seele sich in Berührung mit der Führung (13, 14) dreht.

6. Gleitschienenanordnung nach einem der Ansprüche 1 bis 4, bei welcher die flexible Kopplung eine drehbare Seele (60) umfasst, angetrieben durch den Motor (10), wobei die drehbare Seele sich in einer tubusartigen Hülse (65) dreht, die wiederum in der Führung (14') enthalten ist

7. Gleitschienenanordnung nach einem der vorangegangenen Ansprüche, bei welcher das Stützelement (20, 21; 21') einstückig aus Kunststoffmaterial gebildet ist.

8. Gleitschienenanordnung nach einem der vorangegangen Ansprüche, umfassend erste und zweite Stützelemente (20, 21; 20'), den Motor (10) jeweils mit ersten und zweiten Gleitschienen (5) verbindend, wobei das erste Stützelement (20) kürzer ist als das zweite Stützelement (21; 21') und geeignet ist den Motor (10) zu stützen und translatorische und rotatorische Bewegungen des Motors zu beschränken.

9. Gleitschienenanordnung nach einem der vorangegangenen Ansprüche, umfassend erste und zweite Stützelemente (20, 21; 21') festgelegt oder fixiert mit Bezug zueinander.

10. Gleitschienenanordnung nach Anspruch 9, bei welcher das erste Stützelement (20) flexible Arme (23) umfasst, die sich jeweils entlang dem Motor (10) bis zu einem freien Ende erstrecken, bereitgestellt mit einem Haken (24), sich verhakend bezüglich dem zweiten Stützelement (21; 21') und bei welcher der Motor (10) sich in der Längsrichtung erstreckt zwischen ersten und zweiten Enden (42, 43), wobei das erste Stützelement eine erste Endplatine (40) enthält, die das erste Ende (42) des Motors empfängt, wobei das zweite Stützelement eine zweite Endplatine (41) enthält, die das zweite Ende (43) des Motors aufnimmt, wobei die Arme (23) des ersten Stützelementes mit der ersten Endplatine (40) verbunden sind, wobei die Haken (24) der Arme verhackt sind an der zweiten Endplatine (41).

11. Gleitschienenanordnung nach Anspruch 10, bei welcher die Haken (24) verhakt sind an der zweiten Endplatine (41), derart, dass eine Trennung der ersten und zweiten Stützelemente (20, 21; 21') in der transversalen Richtung (Y) verhindert ist beziehungsweise wird und zurückgehalten sind an der zweiten Endplatine (41) vermittels Clipsung oder Verrastung.

12. Gleitschienenanordnung nach einem der Ansprüche 10 bis 11, bei welcher zumindest eines der ersten und zweiten Enden (42, 43) des Motors (10) ein Relief (31) enthält, wechselwirkend durch Eingriff mit einem komplementären Relief (32), ausgebildet in einer der ersten und zweiten Endplatinen, um eine Relativrotation des Motors mit Bezug auf die Endplatine zu verhindern.

13. Fahrzeugsitz, umfassend eine Sitzeinheit (3), gestützt durch eine Gleitschienenanordnung (5) gemäß einem der vorangegangenen Ansprüche.

14. Stützelement für eine Gleitschienenanordnung gemäß einem der Ansprüche 1 bis 12, ausgelegt zum Verbinden eines Elektromotors (10) mit zumindest einer Gleitschiene (5) eines Fahrzeugsitzes, wobei das Stützelement (20, 21; 21') zumindest eine Führung (13, 14; 14') enthält, ausgelegt zum Zurückhalten einer flexiblen Kopplung (11a, 11b; 11b'), verbindend den Motor (10) mit einem Einstellmechanismus (12), zugehörig zu der Gleitschiene,
**dadurch gekennzeichnet, dass** die Führung (13, 14; 14') ausgelegt ist zum vollständigen Einfassen der flexiblen Kopplung (11a, 11b; 11b') über zumindest einen Teil der Länge davon, wenn die flexible Kopplung an dem Stützelement montiert ist.
